# EUROPEAN PATENT SPECIFICATION

(11) **EP 3 329 469 B1**
(45) Date of publication and mention of the grant of the patent: **25.05.2022**
(21) Application number: 16833704.6
(22) Date of filing: 01.08.2016
(51) Int. Cl.: G07B 15/06, G01D 4/00, G07C 5/00, G08G 1/01

(54) **SELF DECLARING DEVICE FOR A VEHICLE USING RESTRICT TRAFFIC LANES**
SELBSTDEKLARIERUNGSVORRICHTUNG FÜR EIN FAHRZEUG MIT NUTZUNG VON FAHRSPUREN MIT VERKEHRSEINSCHRÄNKUNGEN
DISPOSITIF D'AUTO-DÉCLARATION POUR UN VÉHICULE UTILISANT DES VOIES DE CIRCULATION RESTREINTES

(30) Priority: 01.08.2015 US 201562199993 P
(43) Date of publication of application: 06.06.2018
(60) Divisional application: 21201886.5
(73) Proprietor: Neology, Inc., Poway, CA 92064 (US)
(72) Inventor: NYALAMADUGU, Sheshi, Poway, California 92064 (US); MULLIS, Joe, Poway, California 92064 (US); LEANIO, Bobby, Poway, California 92064 (US)
(74) Representative: Barker Brettell LLP
(86) International application number: PCT/US2016/045066
(87) International publication number: WO 2017/023882

(56) References cited:
- EP-A1- 2 472 289
- US-A1- 2010 085 213
- US-A1- 2011 137 773
- US-A1- 2012 280 044
- US-A1- 2014 074 566
- US-A1- 2014 180 773
- US-A1- 2014 313 057
- US-A1- 2014 351 027
- US-A1- 2015 062 340

## Description

### BACKGROUND

### 1. Technical Field

The various embodiments described herein generally relate to wireless devices, and more particularly to a self-declaring wireless device to be used on a vehicle to automatically declare occupancy information.

### 2. Related Art

In various jurisdictions around the world, high occupancy vehicle (HOV) lanes or carpool lanes are generally restricted traffic lanes reserved for exclusive use by vehicles carrying two or more occupants typically during peak commute times. Meanwhile, high occupancy toll (HOT) lanes are becoming a more prevalent feature on modern roadways. In contrast to HOV lanes, single occupancy vehicles (SOVs) may be able to pay a fee (e.g., toll) to travel on HOT lanes.

A conventional HOT system relies on radio frequency identification (RFID) enabled electronic toll collection (ETC) readers and tags. To pay the required toll, an SOV motorist may be required to switch on an onboard ETC tag when entering a HOT lane. Despite oversight from law enforcement officials, motorists are nevertheless expected to comply with HOV/HOT rules under a self-imposed "honor system." As such, HOV/HOT enforcement tends to be inconsistent, inconvenient, and ultimately ineffective.

US 2014/313057 discloses managing vehicular traffic on a roadway includes a sensing unit positioned within a vehicle traveling on the roadway. The sensing unit is configured to determine occupancy data based on the number of passengers within the vehicle. An ambient light sensor is operatively associated with the sensing unit such that upon sensing an intensity of ambient light, an adjustment is made to the system to aid in the determination of occupancy data. The occupancy data is configured to be communicated to one or more receiving units positioned above or proximate the roadway.

### SUMMARY

Embodiments described herein provide various examples of a self-declaring wireless device installed on a vehicle operable to automatically detect, determine and declare occupancy information of the vehicle traveling on a restricted traffic lane to an electronic toll collection (ETC) system.

According to one aspect, a self-declaring device adapted to be installed on a vehicle is provided in accordance with claim 1. Some optional or preferred features are set out in the dependent claims.

According to another aspect, a computer-implemented method for performing self-declaration by a vehicle is provided in accordance with claim 2. Some optional or preferred features are set out in the dependent claims.

Other features and advantages of the present inventive concept should be apparent from the following description which illustrates by way of example aspects of the present inventive concept.

### BRIEF DESCRIPTION OF THE DRAWINGS

The structure and operation of the present disclosure will be understood from a review of the following detailed description and the accompanying drawings in which like reference numerals refer to like parts and in which:
FIG. 1 shows a block diagram of an exemplary self-declaring device in accordance with one embodiment described herein.
FIG. 2 presents a flowchart illustrating a process for making a self-declaration by a vehicle equipped with the disclosed self-declaring device in accordance with one embodiment described he.
FIGs 3-5 are images illustrating an example switch tag configured in accordance with one embodiment.

### DETAILED DESCRIPTION

While certain embodiments are described, these embodiments are presented by way of example only, and are not intended to limit the scope of the invention as defined by the appended claims. The methods and systems described herein may be embodied in a variety of other forms. Furthermore, various omissions, substitutions, and changes in the form of the example methods and systems described herein may be made without departing from the scope of protection.

Embodiments described herein provide various examples of a self-declaring wireless device installed on a vehicle operable to automatically detect, determine and declare occupancy information of the vehicle traveling on a restricted traffic lane to an electronic toll collection (ETC) system. Comparing to a manual-declaring device, which operates based on an honor system, the disclosed self-declaring device can be fully automatic, highly reliable and accurate without relying on human honesty. Vehicles using the disclosed self-declaring wireless device can bypass visual checks by law enforcement. As a result, the disclosed self-declaring wireless device allows for consistent, convenient, and high effective HOV/HOT lane enforcement.

According to one aspect, a self-declaring device adapted to be installed on a vehicle is provided according to claim 1.

According to another aspect, a computer-implemented method for performing self-declaration by a vehicle is provided according to claim 2.

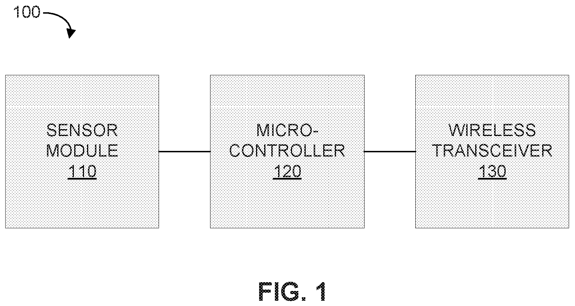

FIG. 1 shows a block diagram of an exemplary self-declaring device 100 in accordance with one embodiment described herein. Referring to FIG. 1, self-declaring device 100 includes a sensor module 110, a microcontroller 120, and a wireless transceiver 130, which are coupled to each other by wired connections, wireless connections, or a combination of both.

Sensor module 110 can include one or more sensors including, but not limited to, a motion sensor, an infrared (IR) sensor, and an image sensor. When self-declaring device 100 is installed on a vehicle, sensor module 110 can detect and collect data inside the vehicle that can be used to determine a number of occupants in the vehicle. For example, if sensor module 110 includes a motion sensor, sensor module 110 can acquire motion information inside the vehicle. Note that motion sensors that can be used within sensor module 110 can include any types of motion sensors which can detect human movement inside a vehicle, which can include, but are not limited to a passive IR sensor, a microwave sensor, an ultrasonic sensor, an acoustic sensor, and a vibration sensor. Alternatively, if sensor module 110 includes an IR sensor, sensor module 110 can acquire IR images, such as thermal images inside the vehicle. Alternatively, if sensor module 110 includes an image sensor, such as a CCD or CMOS camera, sensor module 110 can acquire optical images inside the vehicle. In some embodiments, sensor module 110 can include more than one of the same type of sensors described above. For example, sensor module 110 can include two or more motion sensors, two or more IR sensors, or two or more image sensors. In other embodiments, sensor module 110 can include a combination of different types of sensors. For example, sensor module 110 can include both an IR sensor and an optical image sensor. In this example, sensor module 110 can use the IR sensor to collect data inside the vehicle at night and use the optical image sensor to collect data inside the vehicle during the daytime.

In an example, not part of the invention, sensor module 110 is installed at a location in the vehicle such that the one or more sensors in sensor module 110 can detect intended signals from every seat inside the vehicle. For example, sensor module 110 can be installed near an upper portion of the windshield. If sensor module 110 includes two or more sensors, the two or more sensors can be placed at the same location within the vehicle, or they can be placed at different locations within the vehicle. For example, if sensor module 110 includes two sensors, the first sensor can be installed in the front of the vehicle while the second sensor can be installed in the back of the vehicle.

In various embodiments, sensor module 110 can be configured to transmit at least some of the collected data to microcontroller 120. For example, sensor module 110 can transmit the collected data through a wired or wireless connection to microcontroller 120. In some embodiments, microcontroller 120 is implemented as a field-programmable gate array (FPGA) or one or more application specific integrated circuits (ASICs). In other embodiments, microcontroller 120 is a microprocessor chip such as a CPU. In some embodiments, microcontroller 120 is implemented as a System on Chip (SoC).

In some embodiments, microcontroller 120 is configured to receive the data detected and collected by sensor module 110 (or "sensor data" hereinafter) and to automatically determine a number of occupants in the vehicle based on the received sensor data. For example, if the sensor data include photographic images captured by an image sensor, microcontroller 120 can use an imaging processing module to process the photographic images to determine a number of occupants in the vehicle. In these embodiments, microcontroller 120 can further determine, based on determined number of occupants, whether the vehicle is an SOV or an HOV. In some embodiments, microcontroller 120 can also determine whether the number of occupants in the vehicle exceeds a minimum number of occupants required for a specific HOV lane access in a given jurisdiction.

In some embodiments, microcontroller 120 is further configured to control an operation of wireless transceiver 130, including making a self-declaration to an ETC system. For example, microcontroller 120 can change an operation state (e.g., on/off states) of wireless transceiver 130 based on the determined occupancy data. In one embodiment, if it is determined by microcontroller 120 that the number of occupants in the vehicle does not meet or exceed the minimum number of occupants required by an HOT lane, microcontroller 120 can be configured to change the operation state of wireless transceiver 130 so that wireless transceiver 130 can communicate relevant data, such as the determined number of occupants (i.e., making a self-declaration) and payment information, to a HOT lane reader. Alternatively, if it is determined by microcontroller 120 that the number of occupants in the vehicle does meet or exceeds the minimum number of occupants required by a HOT lane, microcontroller 120 can be configured to control wireless transceiver 130 so that wireless transceiver 130 either does not self-declare to a HOT lane reader or only communicates the determined number of occupants to a HOT lane reader without making any payment.

According to one exemplary embodiment, wireless transceiver 130 can operate at multiple frequencies, such as a high-frequency (HF) and an ultra-high frequency (UHF). In this embodiment, microcontroller 120 can change the operation state of wireless transceiver 130 by changing the operation frequency of wireless transceiver 130. Alternately or in addition, in some embodiments, microcontroller 120 can transmit the determined occupancy data (e.g., number of occupants, HOV compliance information) to wireless transceiver 130. Wireless transceiver 130 can subsequently transmit at least a portion of the occupancy data to an ETC toll reader, such as a HOT lane reader.

In some embodiments, wireless transceiver 130 includes one or more wireless communication modules, which can include, but not limited to, a radio frequency identification (RFID) module (such as an RFID transponder), a WI-FI module, a ZigBee module, and a Bluetooth^{®} module. In one embodiment, wireless transceiver 130 is configured to both transmit data to and receive data from a corresponding reader (e.g., an ETC toll reader). Wireless transceiver 130 can use a wired or a wireless connection to receive commands and data from microcontroller 120. As mentioned above, wireless transceiver 130 can receive a command from microcontroller 120 to change an operation state, which can include an ON/OFF state. For example, wireless transceiver 130 can be turned from an OFF state to an ON state to enable data transmission, including making self-declaration, after receiving a command from microcontroller 120. Moreover, wireless transceiver 130 can receive data from microcontroller 120 and to subsequently transmit at least a portion of the received data, including data for self-declaration. For example, wireless transceiver 130 can receive determined occupancy data from microcontroller 120 and subsequently transmit the determined occupancy data to a HOT lane reader as self-declaration. Wireless transceiver 130 can be strategically positioned on a vehicle to facilitate communicating with an ETC toll reader. For example, wireless transceiver 130 can be placed on the windshield or integrated with the license plate. In some embodiments, wireless transceiver 130 includes an RFID transponder.

Embodiments of an RFID-enabled license plate (i.e., a license plate with the integrated wireless transceiver 130) are described in U.S. Patent No. 8,344,890 and 9,007,215, and U.S. Patent Applications 15/093,636.

It will be appreciated that sensor module 110, microcontroller 120, and wireless transceiver 130 can be coupled with each other via a wired and/or wireless connection. As such, in some embodiments, sensor module 110, microcontroller 120, and wireless transceiver 130 can be placed at different locations on the vehicle. For example, sensor module 110 and/or the microcontroller 120 can be placed within the cabin of the vehicle while wireless transceiver 130 can be integrated into a front and/or rear license plate. In other embodiments, sensor module 110, microcontroller 120, and wireless transceiver 130 are integrated into a single package inside a protective case. In these embodiments, the self-declaration device 100 can be placed at a location on a vehicle to facilitate both the operation of sensor module 110 and the operation of wireless transceiver 130.

In some embodiments, wireless transceiver 130 can include at least one RFID module configured to interface with multiple RFID systems at different frequencies. Multifrequency RFID tags are described in Reissued U.S. Patent Nos. RE 43,355 and RE 44,691. According to one exemplary embodiment, microcontroller 120 can change the operation state of wireless transceiver 130 by changing the operation frequency of the wireless transceiver 130.

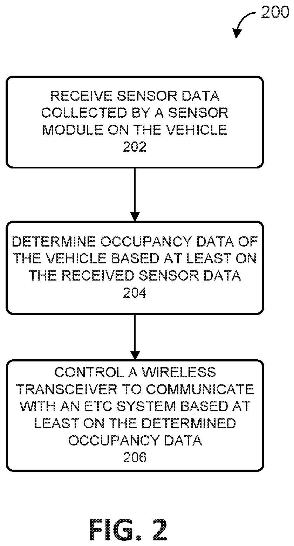

FIG. 2 presents a flowchart illustrating a process 200 for making a self-declaration by a vehicle equipped with self-declaring device 100 in accordance with one embodiment described herein. In some embodiments, process 200 is specifically performed by microcontroller 120 within self-declaring device 100, and is performed when the vehicle is traveling on a restricted traffic lane.

As can be seen in FIG. 2, process 200 begins with microcontroller 120 receiving at least a portion of sensor data collected by sensor module 110 installed on the vehicle (step 202). For example, microcontroller 120 can receive the sensor data from one or more sensors included in sensor module 110, which can include but not limited to, one or more motion sensors, one or more IR sensors, and one or more image sensors. As mentioned above, sensor module 110 can detect and collect data inside the vehicle that can be used to determine a number of occupants in the vehicle.

Next in process 200, microcontroller 120 determines occupancy data of the vehicle based at least on the received sensor data (step 204). For example, microcontroller 120 can determine a number of occupants in the vehicle based on the sensor data. Microcontroller 120 can also determine, based on the received sensor data, whether the vehicle is an SOV or an HOV. In some embodiments, microcontroller 120 can also determine whether the determined number of occupants in the vehicle meets or exceeds a minimum number of occupants required for a specific HOT lane access in a given jurisdiction.

Next in process 200, microcontroller 120 controls wireless transceiver 130 to communicate with an ETC system associated with the restricted traffic lane based at least on the determined occupancy data (step 206). Note that in step 206, a self-declaration is included when the communication between wireless transceiver 130 and the ETC system includes transmitting occupancy information from transceiver 130 to the ETC system. In some embodiments, controlling wireless transceiver 130 includes enabling the wireless transceiver to communicate with the ETC system by changing the operation state of wireless transceiver 130. For example, wireless transceiver 130 can be turned from an OFF state to an ON state to enable data transmission, including making self-declaration, after receiving a command from microcontroller 120. To enable self-declaration in step 206, microcontroller 120 can transmit the determined occupancy data (e.g., number of occupants, HOV compliance information) to wireless transceiver 130. An enabled wireless transceiver 130 can subsequently transmit at least a portion of the occupancy data to the ETC system.

In some embodiments, microcontroller 120 enables wireless transceiver 130 if the determined number of occupants in the vehicle does not exceed the minimum number of occupants required by the restricted traffic lane. For example, if microcontroller 120 determines that the number of occupants in the vehicle is not greater than one (i.e., SOV), microcontroller 120 can change the operation state of wireless transceiver 130 such that wireless transceiver 130 can communicate with an HOT lane reader, for example, to transmit account information and/or exchanging payment information with the HOT lane reader.

In various embodiments, self-declaring device 100 can be used in one or more account management applications for the vehicle which is equipped with self-declaring device 100. For example, self-declaring device 100 can be used to track the vehicle for purposes of electronic tolling, parking access, and border control. Similar applications are described in U.S. Patent No. 14/459,299, now U.S. Patent No. 9,355,398 and U.S. Patent Application No. 15/167,829.

In an example, not part of the invention, access to data on self-declaring device 100 can be granted based on a security key. The provision of secure identification solutions is described in U.S. Patent No. 7,081,819, U.S. Patent No. 7,671,746, U.S. Patent No. 8,237,568, U.S. Patent No. 8,322,044, and U.S. Patent No. 8,004,410.

Some applications would require a placement of metallic material (e.g., retroreflective material, holographic image) over self-declaring device 100 and in particular wireless transceiver 130. In order to preserve the transmission and reception capabilities of wireless transceiver 130, a selective de-metallization process can be employed to treat the metallic material. Selective de-metallization is described in U.S. Patent No. 7,034,688 and 7,463,154.

In certain embodiments, wireless transceiver module can actually comprise multiple modules configured to operate, e.g., at different frequencies depending on which module is activated or capable of transmitting. This is similar to transceiver 130 being configured to operate at different frequencies. In such embodiments, transceiver 130 can be configured to switch frequencies based on the information gathered by sensor module 110. Thus, of the occupancy is determined to be below that required by a HOT lane, then the transceiver module can use one frequency to communicate with a reader on the toll system. If, however, the occupancy is determined to meet or exceed the HOT lane requirements, then the transceiver 130 can communicate using another frequency.

The dual frequencies can be in different bands, e.g., HF and UHF, or can simply be different frequencies within a single band. In other embodiments, different bands can be used for different functions, e.g., tolling versus account management as described, e.g., in U.S. Patent Nos. RE 43,355 and RE 44,691.

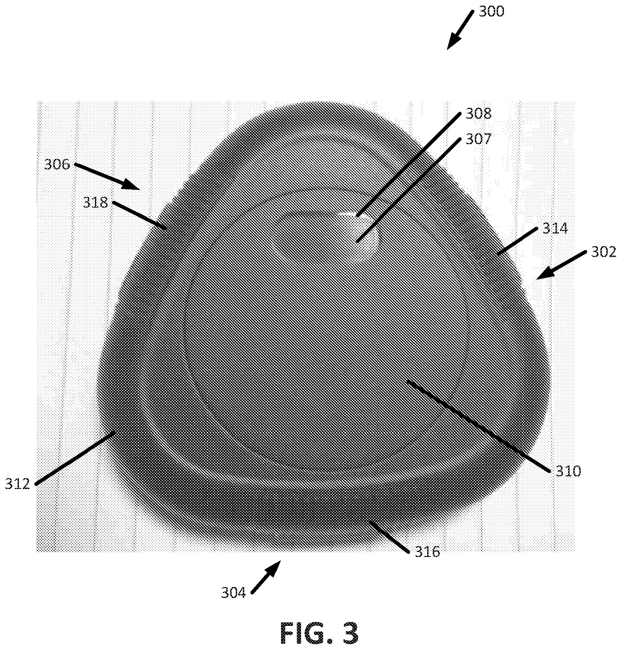

Conversely, a multi module switch tag 300 that can be used for transceiver 130 is illustrated in FIGs. 3-5. Tag 300 can operate substantially similar to the embodiments of the switch tags, e.g., described in the parent '196 Application. Specifically, tag 300 can operate in a similar fashion as that disclosed in FIG. 8 of the '196 Application. Thus, tag 300 can comprise a single booster antenna and three RF modules. The modules can be positioned, e.g., at positions 302, 304 and 306 within tag 300. The single booster antenna can be positioned at one positon, e.g., positon 302. The top potion 312 of the body of tag 300 can then be rotated, e.g., using gripping features 314, 316 and 318 to bring the appropriate RF module into positon, such that it is coupled with the booster antenna.

Each RF module can be configured to transmit different data to indicate a different status. For example, one module can be configured to transmit data indicating that the occupancy of the vehicle meets or exceeds that required by a HOT lane, while another can be to transmit data indicating that the occupancy does not meet or exceed that required by the HOT lane. Alternatively, the HOT lane may be configured such that different charges apply depending on the occupancy, such that there are multiple charge levels. Thus, each of the RF modules included in tag 300 can be associated with different occupancy levels or numbers and can therefore transmit information related to the associated occupancy levels or numbers. For example, one RF module can be associated with single occupancy, one with occupancy of 2 people, and the third with an occupancy of three people or more. A user can then rotate top portion 312 to the appropriate position based on the occupancy.

In an example, not part of the invention, tag 300 can comprise three booster antenna, e.g., configured to operate at different frequencies and single RF module. The different frequencies would then indicate the occupancy level or other settings associated with the positons 302, 304, and 306, respectively.

In an example, not part of the invention, there should be some indication of which position is associated with what occupancy or other setting. Thus, tag 300 can comprise a window 308 that is configured to reveal a color coded area 307 that is part of top portion 312. Thus, as portion 312 is rotated, portion 310 comprising window 308 remains still. Portion can then include colored areas 307 that are positioned such that a different colored area 307 comes to rest behind window 308 depending on which RF module, or booster antenna is in the operational position.

For example, red can be used to indicate single occupancy and green for multiple occupants. If there are different charges for, e.g., two occupants versus three or more, then a color can be associated with each of two occupants and three or more. The user would then rotate top portion 312 until the appropriate color are 307 appears behind window 308.

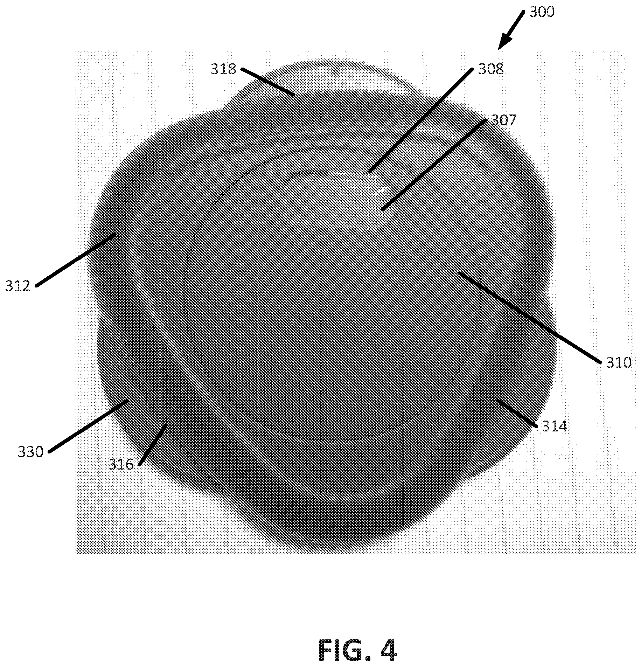

In an example, not part of the invention, FIG. 4 illustrates a rear view of tag 300 in accordance with one embodiment. It should be noted that tag 300 is configured to be mounted in the window of a vehicle with the rear portion 324 facing outward from the vehicle. A mounting bracket or mechanism, such as bracket 322 can be used to mount tag 30 0to the window. Bracket 322 can have adhesives, suction devices, Velcro, etc., attached thereto in order to achieve the mounting of tag 300. Back portion 324 can be coupled with portion 310 on the reverse side, such that portions 310 and 324 do not rotate as top portion 312 is rotated.

As can be seen in figure 4, in certain embodiments a window 326 can also be included in back portion 324 in order to reveal colored areas 320 on the back surface of top portion 312. The colored areas 320 can match the coloring scheme associated with areas 307 on the front surface of top portion 312. This can enable visual verification and enforcement for authorities. In other words, if a single occupant driver switches the positon of tag 300 to one that indicates multiple occupancy, then the colored area 320 behind window 326 will indicate multiple occupancy. An enforcement official can see the color through window 326 and can confirm whether it is appropriate. For this reason, window 326 is typically larger than window 308, which is only viewed from within the vehicle.

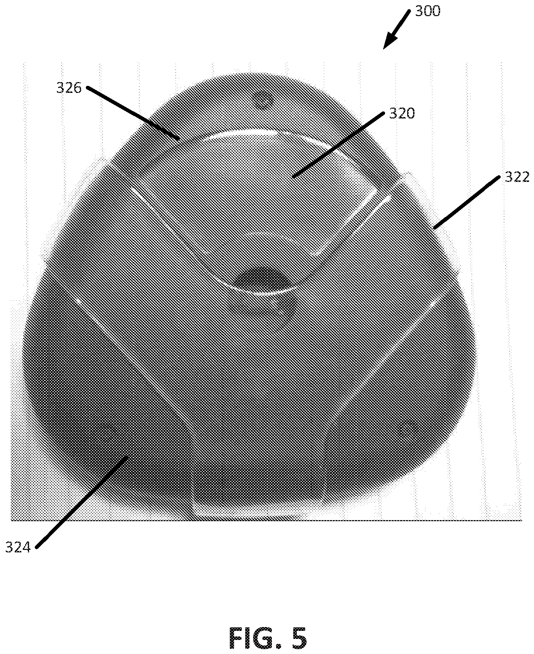

The windows can also be used to detect that the position of tag 300 is off, whether intentionally or not. For example, if the user has not fully rotated top portion 312 to the correct position, then colored are 307 and 320 will not be aligned behind windows 308 and 326 respectively, as illustrated in FIG. 5, providing a visual indicator to both the occupants and enforcement officials that tag 300 is not operational, or appropriately positioned. A top surface of back portion 324 can also be color coded to help indicate misalignment to the occupants.

Thus, the sensor information provided by sensor module 110 can be used to confirm the physical positon of a tag such as tag 300. For example, if a single occupancy driver positons tag 300 to indicate a multiple occupancy setting, then the sensor data would not match the occupancy indication being provided by tag 300. This can cause controller 120 to cause the RF module to transmit some type of error code that indicates that the occupancy information being transmitted is incorrect, or it may cause tag 300 not to transmit at all. In alternative embodiments, wireless transceiver 130 may be separate from tag 300 and may transmit separate information that can be read and compared to that being communicated by tag 300.

The accompanying claims are intended to cover such forms or modifications as would fall within the scope of the claims. For example, the example apparatuses, methods, and systems disclosed herein can be applied wireless communication devices incorporating HF and/or UHF RFID reader capabilities. The various components illustrated in the figures may be implemented as, for example, but not limited to, software and/or firmware on a processor, ASIC/FPGA/DSP, or dedicated hardware. Also, the features and attributes of the specific example embodiments disclosed above may be combined in different ways to form additional embodiments, all of which fall within the scope of the present disclosure.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable storage medium or non-transitory processor-readable storage medium. The steps of a method or algorithm disclosed herein may be embodied in processor-executable instructions that may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Bluray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

## Claims

1. A self-declaring device (100) adapted to be installed on a vehicle, comprising:
a sensor module (110) configured to collect data from inside the vehicle, the sensor module (110) comprising a plurality of sensors including at least a first sensor and a second sensor, wherein the first sensor is configured to collect the data from inside the vehicle during a first period of day and the second sensor is configured to collect the data from inside the vehicle during a second period of the day;
a wireless transceiver (130) comprising a plurality of operation states and configured to communicate with an electronic toll collection (ETC) system using one or more of the plurality of operation states, wherein the operation states of the wireless transceiver (130) include at least one of an ON/OFF state of the wireless transceiver (130) and a plurality of operation frequencies of the wireless transceiver (130); and
a microcontroller (120) coupled to both the sensor module (110) and the wireless transceiver (130) and configured to:
receive at least a portion of data collected by the sensor module (110);
determine occupancy data based at least in part on the at least a portion of data;
determine an operation state of the wireless transceiver (130) from the plurality of operation states based at least on the determined occupancy data;
change the operation state of the wireless transceiver (130) to the determined operation state in response to the determination; and
communicate the occupancy data with a reader of the ETC system using the determined operation state of the wireless transceiver (130), wherein if the determined operation state is the OFF state, communication with the ETC system is disabled and, if the determined operation state is the ON state, communication with the ETC system is enabled.

2. A computer-implemented method for performing self-declaration by a vehicle, the method comprising:
receiving sensor data collected by one or more sensors installed on the vehicle, the plurality of sensors including at least a first sensor and a second sensor, wherein the first sensor is for collecting the data during a first period of day and the second sensor is for collecting the data during a second period of the day (202);
determining occupancy data of the vehicle based at least on the received sensor data (204);
determining an operation state from a plurality of operation states of a wireless transceiver (130) installed on the vehicle based at least on the determined occupancy data, wherein the wireless transceiver comprises the plurality of operation states and is configured to communicate with an electronic toll collection (ETC) system associated with a restricted traffic lane using one or more of the plurality of operation states, wherein the operation states of the wireless transceiver (130) include at least one of an ON/OFF state of the wireless transceiver (130) and a plurality of operation frequencies of the wireless transceiver (130); and
in response to the determination (206), changing the operation state of the wireless transceiver (130) to the determined operation state to communicate the occupancy data with the ETC system associated with the restricted traffic lane using the determined operation state of the wireless transceiver (130), wherein if the determined operation state is the OFF state, communication with the ETC system is disabled and, if the determined operation state is the ON state, communication with the ETC system is enabled.

3. The computer-implemented method of claim 2, wherein controlling the wireless transceiver (130) to communicate with the ETC system includes:
transmitting the determined occupancy data to the wireless transceiver (130); and
enabling the wireless transceiver (130) to transmit the determined occupancy data to the ETC system to make a self-declaration.

4. The self-declaring device of claim 1, wherein the sensor module (110) includes one or more sensors of the same type or a combination of different types of sensors, wherein the types of sensors include motion sensors, infrared (IR.) sensors, and image sensors.

5. The self-declaring device of claim 1 or of claim 4, wherein the collected data include IR images captured by an IR sensor.

6. The self-declaring device of claim 1 or of claim 4 or of claim 5, wherein the collected data include optical images captured by an image sensor.

7. The self-declaring device of claim 1, or of any of claims 4 to 6, wherein the sensor module (110) and the microcontroller (120) are coupled through a wired connection, a wireless connection, or a combination of both.

8. The self-declaring device of claim 1, or of any of claims 4 to 7, wherein wireless transceiver (130) includes one of the following: a radio frequency identification (RFID) module, a WI-FI module, a ZigBee module, and a Bluetooth^{®} module; or
the self-declaring device of claim 1, or of any of claims 4 to 7, wherein the wireless transceiver (130) includes an RFID transponder configured to operate at multiple frequencies.

9. The self-declaring device of claim 1, or of any of claims 4 to 8, wherein the occupancy data includes a number of occupants in the vehicle, or wherein the occupancy data includes a determination of whether the number of occupants in the vehicle exceeds a minimum number of occupants required for a specific high occupancy toll (HOT) lane access.

10. The self-declaring device of claim 1, or of any preceding device claim, wherein the microcontroller (120) includes an imaging processing module which is configured to determine the occupancy data by processing a captured image in the at least a portion of data .

11. The self-declaring device of claim 9, wherein the occupancy data includes a determination of whether the number of occupants in the vehicle exceeds a minimum number of occupants required by the restricted traffic lane if the restricted traffic lane is a high occupancy toll (HOT) lane, and optionally or preferably wherein controlling the wireless transceiver (130) includes enabling the wireless transceiver (130) to communicate with the ETC system associated with the HOT lane if the determined number of occupants in the vehicle does not exceed the minimum number of occupants required by the HOT lane, and further optionally or preferably wherein communicating with the ETC system includes transmitting account information and/or exchanging payment information with the ETC system.

12. The self-declaring device of claim 1, or of any preceding device claim, wherein the microcontroller (120) is configured to communicate with the ETC system using the determined operation state of the wireless transceiver (130).

13. The computer-implemented method of claim 2 or of claim 3, wherein the one or more sensors include one of the following: a motion sensor, an infrared (IR) sensor, an image sensor, and a combination of the above.

14. The computer-implemented method of claim 2 or of claim 3 or of any preceding method claim, wherein receiving the sensor data includes receiving the sensor data through one of the following: a wired connection, a wireless connection, and a combination of both.

15. The computer-implemented method of claim 2 or of any preceding method claim, wherein the occupancy data includes a number of occupants in the vehicle, or wherein the occupancy data includes a determination of whether the number of occupants in the vehicle exceeds a minimum number of occupants required for a specific high occupancy toll (HOT) lane access.

16. The computer-implemented method of claim 2, or of any preceding method claim, wherein determining occupancy data of the vehicle includes processing one or more images inside the vehicle captured by the one or more sensors using an imaging processing module.

17. The computer-implemented method of claim 2, or of any preceding method claim, further comprising communicating with the ETC system using the determined operation state of the wireless transceiver. (130).

## Patentansprüche

1. Selbstdeklarierungsvorrichtung (100), die geeignet ist, in einem Fahrzeug installiert zu werden, umfassend:
ein Sensormodul (110), das dazu konfiguriert ist, Daten aus dem Inneren des Fahrzeugs zu sammeln, wobei das Sensormodul (110) eine Mehrzahl von Sensoren mit mindestens einem ersten Sensor und einem zweiten Sensor umfasst, wobei der erste Sensor dazu konfiguriert ist, die Daten aus dem Inneren des Fahrzeugs während einer ersten Tagesperiode zu sammeln, und der zweite Sensor dazu konfiguriert ist, die Daten aus dem Inneren des Fahrzeugs während einer zweiten Tagesperiode zu sammeln;
einen drahtlosen Transceiver (130), der eine Mehrzahl von Betriebszuständen aufweist und dazu konfiguriert ist, mit einem elektronischen Mauterhebungssystems (ETC-Systems) unter Verwendung eines oder mehrerer der Mehrzahl von Betriebszuständen zu kommunizieren, wobei die Betriebszustände des drahtlosen Transceivers (130) mindestens eines von einem EIN/AUS-Zustand des drahtlosen Transceivers (130) und einer Mehrzahl von Betriebsfrequenzen des drahtlosen Transceivers (130) umfassen (130); und
einen Mikrocontroller (120), der sowohl mit dem Sensormodul (110) als auch mit dem drahtlosen Transceiver (130) gekoppelt und dazu konfiguriert ist, um:
mindestens einen Teil der von dem Sensormodul (110) gesammelten Daten zu empfangen;
Belegungsdaten mindestens teilweise auf Basis von mindestens dem Teil der Daten zu bestimmen;
einen Betriebszustands des drahtlosen Transceivers (130) aus der Mehrzahl von Betriebszuständen auf Basis von mindestens den bestimmten Belegungsdaten zu bestimmen;
den Betriebszustands des drahtlosen Transceivers (130) als Reaktion auf die Bestimmung in den bestimmten Betriebszustand zu ändern; und
die Belegungsdaten mit einem Lesegerät des ETC-Systems unter Verwendung des bestimmten Betriebszustands des drahtlosen Transceivers (130) zu übermitteln, wobei, wenn der bestimmte Betriebszustand der AUS-Zustand ist, die Kommunikation mit dem ETC-System deaktiviert ist, und wenn der bestimmte Betriebszustand der EIN-Zustand ist, die Kommunikation mit dem ETC-System aktiviert ist.

2. Computerimplementiertes Verfahren zum Durchführen der Selbstdeklaration durch ein Fahrzeug, wobei das Verfahren umfasst:
Empfangen von Sensordaten, die von einem oder mehreren an dem Fahrzeug installierten Sensoren gesammelt werden, wobei die Mehrzahl von Sensoren mindestens einen ersten Sensor und einen zweiten Sensor umfasst, wobei der erste Sensor zum Sammeln der Daten während einer ersten Tagesperiode dient und der zweite Sensor zum Sammeln der Daten während einer zweiten Tagesperiode dient (202) ;
Bestimmen von Belegungsdaten des Fahrzeugs auf Basis von mindestens den empfangenen Sensordaten (204);
Bestimmen eines Betriebszustands aus einer Mehrzahl von Betriebszuständen eines an dem Fahrzeug installierten drahtlosen Transceivers (130) auf Basis von mindestens den ermittelten Belegungsdaten, wobei der drahtlose Transceiver die Mehrzahl von Betriebszuständen umfasst und dazu konfiguriert ist, unter Verwendung eines oder mehrerer von der Mehrzahl von Betriebszuständen mit einem elektronischen Mauterhebungssystem (ETC-System) zu kommunizieren, das einer Fahrspur mit Verkehrseinschränkungen zugeordnet ist, wobei die Betriebszustände des drahtlosen Transceivers (130) mindestens einen von einem EIN/AUS-Zustand des drahtlosen Transceivers (130) und einer Mehrzahl von Betriebsfrequenzen des drahtlosen Transceivers (130) umfassen; und
Ändern, als Reaktion auf die Bestimmung (206), des Betriebszustands des drahtlosen Transceivers (130) in den bestimmten Betriebszustand, um die Belegungsdaten unter Verwendung des bestimmten Betriebszustands dem der Fahrspur mit Verkehrseinschränkungen zugeordneten ETC-System des drahtlosen Transceivers (130) zu übermitteln, wobei, wenn der bestimmte Betriebszustand der AUS-Zustand ist, die Kommunikation mit dem ETC-System deaktiviert ist, und wenn der bestimmte Betriebszustand der EIN-Zustand ist, die Kommunikation mit dem ETC-System aktiviert ist.

3. Computerimplementiertes Verfahren nach Anspruch 2, wobei das Steuern des drahtlosen Transceivers (130) zum Kommunizieren mit dem ETC-System umfasst:
Senden der ermittelten Belegungsdaten an den drahtlosen Transceiver (130);
und
Aktivieren des drahtlosen Transceivers (130), um die ermittelten Belegungsdaten an das ETC-System zu senden, um eine Selbstdeklaration abzugeben.

4. Selbstdeklarierungsvorrichtung nach Anspruch 1, wobei das Sensormodul (110) einen oder mehrere Sensoren desselben Typs oder eine Kombination verschiedener Sensortypen umfasst, wobei die Sensortypen Bewegungssensoren, Infrarot (IR)-Sensoren und Bildsensoren umfassen.

5. Selbstdeklarierungsvorrichtung nach Anspruch 1 oder 4, wobei die gesammelten Daten von einem IR-Sensor erfasste IR-Bilder umfasst.

6. Selbstdeklarierungsvorrichtung nach Anspruch 1, 4 oder 5, wobei die gesammelten Daten von einem Bildsensor erfasste optische Bilder umfassen.

7. Selbstdeklarierungsvorrichtung nach Anspruch 1 oder nach einem der Ansprüche 4 bis 6, wobei das Sensormodul (110) und der Mikrocontroller (120) über eine drahtgebundene Verbindung, eine drahtlose Verbindung oder eine Kombination aus beiden gekoppelt sind.

8. Selbstdeklarierungsvorrichtung nach Anspruch 1 oder nach einem der Ansprüche 4 bis 7, wobei der drahtlose Transceiver (130) eines des Folgenden umfasst: ein Radiofrequenz-Identifikations-(RFID) Modul, ein WI-FI-Modul, ein ZigBee-Modul und ein Bluetooth^{®} Modul; oder
die Selbstdeklarierungsvorrichtung nach Anspruch 1 oder nach einem der Ansprüche 4 bis 7, wobei der drahtlose Transceiver (130) einen RFID-Transponder umfasst, der dazu konfiguriert ist, auf mehreren Frequenzen zu arbeiten.

9. Selbstdeklarierungsvorrichtung nach Anspruch 1 oder nach einem der Ansprüche 4 bis 8, wobei die Belegungsdaten die Anzahl der Insassen des Fahrzeugs umfassen, oder wobei die Belegungsdaten eine Bestimmung darüber umfassen, ob die Anzahl der Insassen im Fahrzeug eine Mindestanzahl von Insassen übersteigt, die für einen bestimmten Zugang zu High-Occupancy Toll Lanes (HOT-Fahrspuren) erforderlich ist.

10. Selbstdeklarierungsvorrichtung nach Anspruch 1 oder nach einem der vorhergehenden Vorrichtungsansprüche, wobei der Mikrocontroller (120) ein Bildverarbeitungsmodul umfasst, das dazu konfiguriert ist, die Belegungsdaten durch Verarbeiten eines erfassten Bildes in dem mindestens einen Teil von Daten zu bestimmen.

11. Selbstdeklarierungsvorrichtung nach Anspruch 9, wobei die Belegungsdaten eine Bestimmung darüber umfassen, ob die Anzahl der Insassen in dem Fahrzeug eine Mindestanzahl von Insassen übersteigt, die für die Fahrspur mit Verkehrseinschränkungen erforderlich ist, wenn die Fahrspur mit Verkehrseinschränkungen eine High-Occupancy Toll Lane (HOT-Fahrspur) ist, und optional oder bevorzugt, wobei das Steuern des drahtlosen Transceivers (130) das Aktivieren des drahtlosen Transceivers (130), um mit dem der HOT-Fahrspur zugeordneten ETC-System zu kommunizieren, wenn die bestimmte Anzahl von Insassen in dem Fahrzeug die für die HOT-Fahrspur erforderliche Mindestanzahl von Insassen nicht überschreitet, und wobei ferner optional oder bevorzugt das Kommunizieren mit dem ETC-System das Senden von Kontoinformationen und/oder das Austauschen von Zahlungsinformationen mit dem ETC-System umfasst.

12. Selbstdeklarierungsvorrichtung nach Anspruch 1 oder einem der vorhergehenden Vorrichtungsansprüche, wobei der Mikrocontroller (120) dazu konfiguriert ist, mit dem ETC-System unter Verwendung des bestimmten Betriebszustands des drahtlosen Transceivers (130) zu kommunizieren.

13. Computerimplementiertes Verfahren nach Anspruch 2 oder 3, wobei der eine oder die mehreren Sensoren einen der folgenden umfassen: einen Bewegungssensor, einen Infrarot (IR)-Sensor, einen Bildsensor und eine Kombination der oben genannten.

14. Computerimplementiertes Verfahren nach Anspruch 2 oder nach Anspruch 3 oder nach einem der vorhergehenden Verfahrensansprüche, wobei das Empfangen der Sensordaten das Empfangen der Sensordaten über eines des Folgenden umfasst: eine drahtgebundene Verbindung, eine drahtlose Verbindung und eine Kombination aus beiden.

15. Computerimplementiertes Verfahren nach Anspruch 2 oder einem der vorhergehenden Verfahrensansprüche, wobei die Belegungsdaten eine Anzahl von Insassen in dem Fahrzeug umfassen,
oder
wobei die Belegungsdaten eine Bestimmung darüber umfassen, ob die Anzahl der Insassen im Fahrzeug eine Mindestanzahl von Insassen übersteigt, die für einen spezifischen Zugang zu einer High-Occupancy Toll Lane (HOT-Fahrspur) erforderlich ist.

16. Computerimplementiertes Verfahren nach Anspruch 2 oder einem der vorhergehenden Verfahrensansprüche, wobei das Bestimmen von Belegungsdaten des Fahrzeugs die Verarbeitung eines oder mehrerer Bilder im Inneren des Fahrzeugs, die unter Verwendung eines Bildverarbeitungsmoduls von dem einen oder den mehreren Sensoren aufgenommen wurden, umfasst.

17. Computerimplementiertes Verfahren nach Anspruch 2 oder einem der vorhergehenden Verfahrensansprüche, ferner das Kommunizieren mit dem ETC-System unter Verwendung des bestimmten Betriebszustandes des drahtlosen Transceivers (130) umfassend.

## Revendications

1. Dispositif d'auto-déclaration (100) conçu pour être installé sur un véhicule, comprenant :
un module de capteurs (110) configuré pour collecter des données depuis l'intérieur du véhicule, le module de capteurs (110) comprenant une pluralité de capteurs incluant au moins un premier capteur et un second capteur, le premier capteur étant configuré pour collecter les données depuis l'intérieur du véhicule pendant une première période de la journée et le second capteur étant configuré pour collecter les données depuis l'intérieur du véhicule pendant une seconde période de la journée ;
un émetteur-récepteur sans fil (130) comprenant une pluralité d'états de fonctionnement et configuré pour communiquer avec un système de péage électronique (ETC) en utilisant un ou plusieurs de la pluralité d'états de fonctionnement, les états de fonctionnement de l'émetteur-récepteur sans fil (130) comprenant au moins l'un parmi un état MARCHE/ARRET de l'émetteur-récepteur sans fil (130) et une pluralité de fréquences de fonctionnement de l'émetteur-récepteur sans fil (130) ; et
un microcontrôleur (120) couplé à la fois au module de capteurs (110) et à l'émetteur-récepteur sans fil (130) et configuré pour :
recevoir au moins une partie des données collectées par le module de capteurs (110) ;
déterminer des données d'occupation sur la base, au moins en partie, de l'au moins une partie des données ;
déterminer un état de fonctionnement de l'émetteur-récepteur sans fil (130) parmi la pluralité d'états de fonctionnement sur la base au moins des données d'occupation déterminées ;
changer l'état de fonctionnement de l'émetteur-récepteur sans fil (130) à l'état de fonctionnement déterminé en réponse à la détermination ; et
communiquer les données d'occupation à un lecteur du système d'ETC en utilisant l'état de fonctionnement déterminé de l'émetteur-récepteur sans fil (130), dans lequel, si l'état de fonctionnement déterminé est l'état ARRÊT, la communication avec le système d'ETC est désactivée et, si l'état de fonctionnement déterminé est l'état MARCHE, la communication avec le système d'ETC est activée.

2. Procédé mis en œuvre par ordinateur pour effectuer une auto-déclaration par un véhicule, le procédé comprenant :
recevoir des données de capteur collectées par un ou plusieurs capteurs installés sur le véhicule, la pluralité de capteurs comprenant au moins un premier capteur et un second capteur, le premier capteur étant configuré pour collecter les données pendant une première période de la journée et le second capteur étant configuré pour collecter les données pendant une seconde période de la journée (202) ;
déterminer des données d'occupation du véhicule au moins sur la base au moins des données de capteur reçues (204) ;
déterminer un état de fonctionnement parmi une pluralité d'états de fonctionnement d'un émetteur-récepteur sans fil (130) installé sur le véhicule sur la base au moins des données d'occupation déterminées, l'émetteur-récepteur sans fil comprenant la pluralité d'états de fonctionnement et étant configuré pour communiquer avec un système de péage électronique (ETC) associé à une voie de circulation restreinte en utilisant un ou plusieurs de la pluralité d'états de fonctionnement, les états de fonctionnement de l'émetteur-récepteur sans fil (130) comprenant au moins l'un parmi un état MARCHE/ARRET de l'émetteur-récepteur sans fil (130) et une pluralité de fréquences de fonctionnement de l'émetteur-récepteur sans fil (130) ; et
en réponse à la détermination (206), changer l'état de fonctionnement de l'émetteur-récepteur sans fil (130) à l'état de fonctionnement déterminé pour communiquer les données d'occupation au système d'ETC associé à la voie de circulation restreinte en utilisant l'état de fonctionnement déterminé de l'émetteur-récepteur sans fil (130), dans lequel, si l'état de fonctionnement déterminé est l'état ARRÊT, la communication avec le système d'ETC est désactivée et, si l'état de fonctionnement déterminé est l'état MARCHE, la communication avec le système d'ETC est activée.

3. Procédé mis en œuvre par ordinateur selon la revendication 2, dans lequel la commande de l'émetteur-récepteur sans fil (130) pour communiquer avec le système d'ETC comprend :
transmettre les données d'occupation déterminées à l'émetteur-récepteur sans fil (130) ; et
activer l'émetteur-récepteur sans fil (130) pour transmettre les données d'occupation déterminées au système d'ETC pour effectuer une auto-déclaration.

4. Dispositif d'auto-déclaration selon la revendication 1, dans lequel le module de capteurs (110) comprend un ou plusieurs capteurs du même type ou une combinaison de différents types de capteurs, et dans lequel les types de capteurs comprennent des capteurs de mouvement, des capteurs infrarouges (IR) et des capteurs d'image.

5. Dispositif d'auto-déclaration selon la revendication 1 ou selon la revendication 4, dans lequel les données collectées comprennent des images IR capturées par un capteur IR.

6. Dispositif d'auto-déclaration selon la revendication 1 ou selon la revendication 4 ou selon la revendication 5, dans lequel les données collectées comprennent des images optiques capturées par un capteur d'image.

7. Dispositif d'auto-déclaration selon la revendication 1 ou selon l'une quelconque des revendications 4 à 6, dans lequel le module de capteurs (110) et le microcontrôleur (120) sont couplés par l'intermédiaire d'une liaison filaire, d'une liaison sans fil ou d'une combinaison des deux.

8. Dispositif d'auto-déclaration selon la revendication 1 ou selon l'une quelconque des revendications 4 à 7, dans lequel l'émetteur-récepteur sans fil (130) comprend l'un des éléments suivants : un module d'identification par radiofréquence (RFID), un module WI-FI, un module ZigBee et un module Bluetooth^{®} ; ou
dispositif d'auto-déclaration selon la revendication 1 ou selon l'une quelconque des revendications 4 à 7, dans lequel l'émetteur-récepteur sans fil (130) comprend un transpondeur RFID configuré pour fonctionner à de multiples fréquences.

9. Dispositif d'auto-déclaration selon la revendication 1 ou selon l'une quelconque des revendications 4 à 8, dans lequel les données d'occupation comprennent un nombre d'occupants dans le véhicule, ou
dans lequel les données d'occupation comprennent une détermination du point de savoir si le nombre d'occupants dans le véhicule dépasse ou non un nombre minimal d'occupants requis pour un accès à une voie de péage réservée aux véhicules multioccupants (HOT) spécifique.

10. Dispositif d'auto-déclaration selon la revendication 1 ou selon l'une quelconque des revendications de dispositif précédentes, dans lequel le microcontrôleur (120) comprend un module de traitement d'image qui est configuré pour déterminer les données d'occupation en traitant une image capturée dans l'au moins une partie des données.

11. Dispositif d'auto-déclaration selon la revendication 9, dans lequel les données d'occupation comprennent une détermination du point de savoir si le nombre d'occupants dans le véhicule dépasse ou non un nombre minimal d'occupants requis par la voie de circulation restreinte si la voie de circulation restreinte est une voie de péage réservée aux véhicules multioccupants (HOT), et facultativement ou de préférence, dans lequel la commande de l'émetteur-récepteur sans fil (130) comprend l'activation de l'émetteur-récepteur sans fil (130) pour communiquer avec le système d'ETC associé à la voie HOT si le nombre déterminé d'occupants dans le véhicule ne dépasse pas le nombre minimal d'occupants requis par la voie HOT, et en outre facultativement ou de préférence, dans lequel la communication avec le système d'ETC comprend la transmission d'informations de compte et/ou l'échange d'informations de paiement avec le système d'ETC.

12. Dispositif d'auto-déclaration selon la revendication 1 ou selon l'une quelconque des revendications de dispositif précédentes, dans lequel le microcontrôleur (120) est configuré pour communiquer avec le système d'ETC en utilisant l'état de fonctionnement déterminé de l'émetteur-récepteur sans fil (130).

13. Procédé mis en œuvre par ordinateur selon la revendication 2 ou selon la revendication 3, dans lequel le ou les capteurs comprennent l'un des éléments suivants : un capteur de mouvement, un capteur infrarouge (IR), un capteur d'image et une combinaison de ceux-ci.

14. Procédé mis en œuvre par ordinateur selon la revendication 2 ou selon la revendication 3 ou selon l'une quelconque des revendications de procédé précédentes, dans lequel la réception des données de capteur comprend la réception des données de capteur par l'intermédiaire de l'un des moyens suivants : une liaison filaire, une liaison sans fil et une combinaison des deux.

15. Procédé mis en œuvre par ordinateur selon la revendication 2 ou selon l'une quelconque des revendications de procédé précédentes, dans lequel les données d'occupation comprennent un nombre d'occupants dans le véhicule, ou
dans lequel les données d'occupation comprennent une détermination du point de savoir si le nombre d'occupants dans le véhicule dépasse ou non un nombre minimal d'occupants requis pour un accès à une voie de péage réservée aux véhicules multioccupants (HOT) spécifique.

16. Procédé mis en œuvre par ordinateur selon la revendication 2 ou selon l'une quelconque des revendications de procédé précédentes, dans lequel la détermination des données d'occupation du véhicule comprend le traitement d'une ou plusieurs images à l'intérieur du véhicule capturées par le ou les capteurs en utilisant un module de traitement d'image.

17. Procédé mis en œuvre par ordinateur selon la revendication 2 ou selon l'une quelconque des revendications de procédé précédentes, comprenant en outre la communication avec le système d'ETC en utilisant l'état de fonctionnement déterminé de l'émetteur-récepteur sans fil (130).
